Europäisches Patentamt

European Patent Office

Office européen des brevets

(19)

(11) **EP 0 614 262 B1**

(12) **EUROPÄISCHE PATENTSCHRIFT**

(45) Veröffentlichungstag und Bekanntmachung des Hinweises auf die Patenterteilung:
**07.05.1997 Patentblatt 1997/19**

(51) Int Cl.6: **H02K 19/06**, H02K 19/10, H02K 29/00

(21) Anmeldenummer: **94200501.8**

(22) Anmeldetag: **28.02.1994**

(54) **Reluktanzmotor**

Reluctance motor

Moteur à reluctance

(84) Benannte Vertragsstaaten:
**DE FR GB**

(30) Priorität: **04.03.1993 DE 4306726**

(43) Veröffentlichungstag der Anmeldung:
**07.09.1994 Patentblatt 1994/36**

(73) Patentinhaber:
- **Philips Patentverwaltung GmbH**
  **22335 Hamburg (DE)**
  Benannte Vertragsstaaten:
  **DE**
- **Philips Electronics N.V.**
  **5621 BA Eindhoven (NL)**
  Benannte Vertragsstaaten:
  **FR GB**

(72) Erfinder: **Lürkens, Peter, Dr. Ing., c/o Philips D-20097 Hamburg (DE)**

(74) Vertreter: **von Laue, Hanns-Ulrich, Dipl.-Ing. et al Philips Patentverwaltung GmbH, Röntgenstrasse 24 22335 Hamburg (DE)**

(56) Entgegenhaltungen:
**EP-A- 0 180 815**

- **IEE PROCEEDINGS B. ELECTRICAL POWER APPLICATIONS, Bd.136, Nr.1, Januar 1989, STEVENAGE, GB, Seiten 50 - 58; J.M.STEPHENSON ET AL.: 'Saturation in doubly salient reluctance motors'**
- **IEE PROCEEDINGS B. ELECTRICAL POWER APPLICATIONS, Bd.127, Nr.4, Juli 1980, STEVENAGE, GB, Seiten 253 - 265; P.J.LAWRENSON ET AL.: 'Variable-speed switched reluctance motors'**
- **PATENT ABSTRACTS OF JAPAN vol. 15, no. 213 (E-1073), 30. Mai 1991 & JP-A-03 060 398 (FANUC), 15. März 1991**

**Beschreibung**

Die Erfindung bezieht sich auf einen Reluktanzmotor mit ferromagnetischen Bauteilen, von denen eines feststeht und das andere beweglich ausgebildet sind, wobei zwischen auf Abstand gegenüber befindlichen Polflächen der Bauteile ein Luftspalt vorgesehen ist und wobei eines der Bauteile mit Erregerspulen versehen ist, die ferromagnetische Kerne umschließen, die eine ferromagnetische Verbindung zwischen den Polteilen dieses Bauteiles herstellen.

Reluktanzmotoren bestehen im wesentlichen aus einem feststehenden ferromagnetischen Bauteil, das im allgemeinen mit Erregerspulen versehen ist, und einem beweglichen Bauteil, das innerhalb eines Luftspaltes umlaufen oder sich verschieben kann. Bei einem einphasigen Reluktanzmotor sind in dem feststehenden ferromagnetischen Bauteil (dem Stator) am Luftspalt zwei Polzähne vorgesehen, die auf einer Radialen einander gegenüberliegen. Auch das ferromagnetische bewegliche Bauteil (der Rotor), weist diametral auseinander liegende Polzähne auf. Die ferromagnetischen Materialien von Rotor und Stator sind bis zu einer gewissen Maximalinduktion, der Sättigungsinduktion, leicht magnetisierbar, wobei die Induktion im Material bei steigendem Strom in den elektrischen Wicklungen bis zur beginnenden Sättigung zunächst schnell und danach nur noch ein wenig zunimmt.

Die Erregung der elektrischen Wicklung erzeugt im feststehenden und im beweglichen Bauteil einen magnetischen Fluß. Die Größe dieses Flusses hängt wesentlich von der Stellung des Rotors zum Stator und von der Stromstärke ab. Die Abhängigkeit von der Stellung wird dadurch erreicht, daß entweder der Rotor oder der Stator oder beide mit ihren ausgeprägten Polteilen, den Zähnen, je nach Stellung des Rotors einen größeren oder kleineren Luftspalt zwischen Stator und Rotor einstellen, der den Übergang des Flusses vom Stator zum Rotor mehr oder weniger behindert.

Soll der magnetische Fluß auf elektrischem Wege verändert werden, dann muß für eine gewisse Zeit eine Spannung U an den Motor angelegt werden. Das Zeitintegral dieser Spannung ist gleich der Flußänderung multipliziert mit der Windungszahl der Statorwicklung. Das Produkt aus magnetischem Fluß und Windungszahl wird als Flußverkettung $\Psi$ bezeichnet. Verhalten sich die beteiligten Materialien ausschließlich linear, dann sind der Statorstrom I und die Flußverkettung $\Psi$ proportional; die Proportionalitätskonstante ist die Induktivität L. Sind die Materialien nicht-linear und weisen diese insbesondere Sättigungseigenschaften auf, so läßt sich der Zusammenhang zwischen I und $\Psi$ wenigstens in kleinen Abschnitten linearisieren. Man bezeichnet dann das Verhältnis $\Delta\Psi/\Delta I$ als differentielle Induktivität. Die Induktivität legt die Spannung fest, die benötigt wird, um in einer gegebenen Zeit $\Delta T$ eine Stromänderung $\Delta I$ und damit eine Flußänderung $\Delta\Psi$ herbeizuführen.

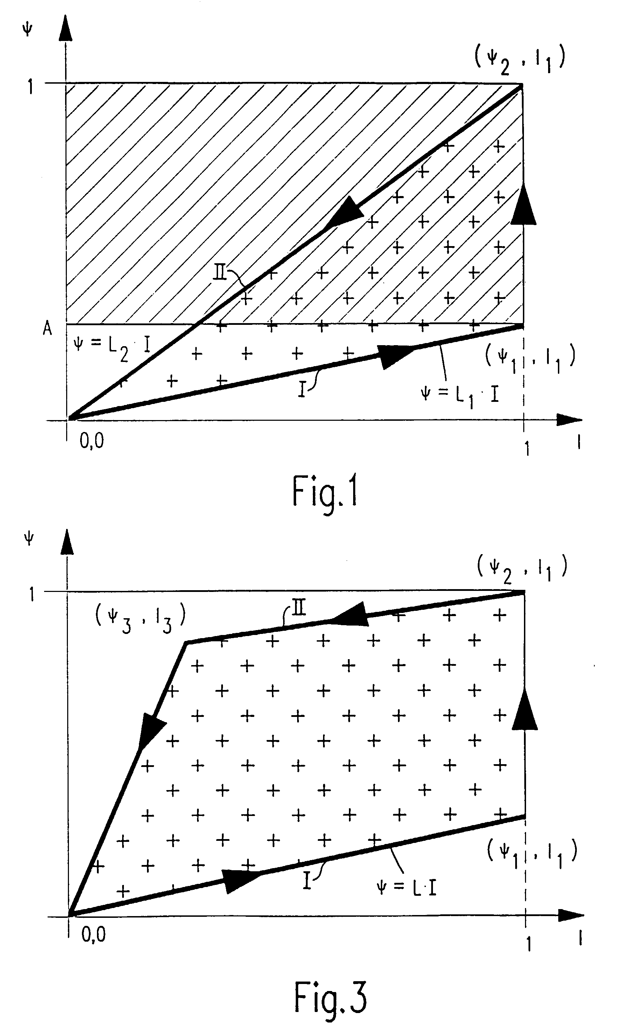

Die Wirkungsweise von Reluktanzmotoren läßt sich mit Hilfe eines Kreisprozesses beschreiben. Dieser Kreisprozeß läßt sich anhand eines Flußverkettungs-Strom-Diagramms ($\Psi$-I-Diagramm) veranschaulichen. Fig. 1 zeigt ein solches, für einen Reluktanzmotor typisches Diagramm für ungesättigten Betrieb in normalisierter und schematischer Form, d.h. alle Verläufe sind durch Geradenstücke angenähert, die Maximalwerte für I und $\Psi$ haben die Zahlenwerte 1. Die magnetische Sättigung ist hier nicht dargestellt.

Wird an den Motor, ausgehend vom spannungs- und stromlosen Zustand (Punkt 0,0), im $\Psi$-I-Diagramm nach Fig. 1 eine elektrische Spannung U angelegt, so wächst der Strom im Motor mit der Zeit t allmählich an, ebenso die Flußverkettung $\Psi$. Es gilt:

$$\frac{d\Psi}{dt} = U \tag{1}$$

Der Zustandspunkt des Motors wandert nun im $\Psi$-I-Diagramm nach Fig. 1 auf einer Geraden $\Psi = L.I$, die der Kennlinienverlauf I angibt, nach rechts. Dabei nimmt der Motor Energie auf. Die aufgenommene Energie ist tatsächlich:

$$W = \int_{0}^{T} U \cdot I \, dt \qquad = \int_{0}^{T} \frac{d\Psi}{dt} \cdot I \, dt \qquad = \int_{0}^{\Psi} I \, d\Psi \qquad (2)$$

Dies stellt geometrisch die Fläche zwischen der Geraden $\Psi = L_1.I$ (Kennlinienverlauf I) und der $\Psi$-Achse des Diagramms dar.

Nun ist ein wesentliches Merkmal eines jeden Reluktanzmotors, daß die Flußverkettung des Motors von der Stellung des Rotors abhängt. Ein solcher Motor wird durch zwei ausgezeichnete Stellungen beschrieben, nämlich die, bei der bei gegebenem Strom die Flußverkettungen minimal (Punkt $\Psi_1$, $I_1$) am rechten Ende des Kennlinienverlaufes I und maximal (Punkt $\Psi_2$, $I_1$) am rechten Ende des Kennlinienverlaufes II sind. Steht der Rotor zunächst in Stellung nach Punkt $\Psi_1$, $I_1$, dann geht der Motorzustand vom Ende des Kennlinienverlaufes I mit Punkt $\Psi_1$, $I_1$ beim Verdrehen des Rotors bei konstantem Strom allmählich in das rechte Ende des Verlaufes II im Punkt $\Psi_2$, $I_1$ über. Dabei nimmt

der Motor die elektrische Energie auf, die der Fläche des schraffierten Rechteckes entspricht. Dies äußert sich an den Klemmen des Motors dadurch, daß während der Verdrehung des Rotors eine elektrische Spannung auftritt, deren Zeitintegral am Ende der Verdrehung dem Unterschied der Flußverkettungen $\Psi_1$ und $\Psi_2$ entspricht. Wird der Strom im Motor nun zu Null eingestellt, dann wandert der Zustand des Motors entlang des Kennlinienverlaufes II nach links wieder in den Ursprung des Diagramms im Punkt 0,0 zurück. Dabei wird die Energie, die der Fläche entspricht, die zwischen dem Kennlinieverlauf II und der $\Psi$-Achse liegt, wieder der Quelle zugeführt. Die Energiebilanz zeigt, daß eine Energie, die der durch den Kreisprozeß umfahrenen Fläche des Dreieckes $(0,0)$-$(\Psi_1,I_1)$-$(\Psi_2,I_1)$ entspricht, elektrisch in den Motor eingespeist wurde. Diese Energie hat der Motor beim Verdrehen als mechanische Energie an der Welle abgegeben. Ziel einer gelungenen Konstruktion eines Reluktanzmotors ist es, diese Energie möglichst groß zu machen.

Dabei tritt das Problem auf, daß der Übergang zwischen den Kennlinien-Verläufen I und II ständig und kontinuierlich stattfindet, wenn der Motor sich dauernd dreht. Um nun nicht während der Übergänge $(0,0)$-$(\Psi_1,I_1)$ oder $(\Psi_2,I_1)$-$(0,0)$ schon auf die jeweils andere Kennlinie zu geraten, sollten die Übergänge möglichst schnell erfolgen, d.h. die Differenzen der Flußverkettung $0$->$\Psi_1$ und $\Psi_2$->$0$ sollten in möglichst kurzer Zeit aufgebaut werden. Dadurch gelingt es, die mit Kreuzen gekennzeichnete Fläche möglichst weit außen zu umfahren, was heißt, daß die umfahrene Fläche möglichst groß wird. Dieser ideale Verlauf ist praktisch jedoch nicht zu realisieren, da der schnelle Auf- und Abbau der Flußverkettungen kurzzeitig hohe Spannungen erfordert. Die Höhe der möglichen angelegten Spannung am Motor ist jedoch durch die elektronische Speisung begrenzt. Besonders der Übergang $\Psi_2$->$0$ ist schwierig, da hier auch eine besonders große Flußverkettung abgebaut werden muß, nämlich $\Psi_2$.

Für den praktischen Betrieb eines Reluktanzmotors ist es wichtig, die sich während des Auf- und Abmagnetisierens einzustellenden Flußverkettungsdifferenzen möglichst niedrig zu halten.

Bei der Betrachtung des $\Psi$-I-Diagrammes bemerkt man, daß bei gegebener maximaler Flußverkettung und gegebenem maximalem Strom ein dreieckförmiges $\Psi$-I-Diagramm die vorliegende Fläche keinesfalls optimal ausnutzt. Vielmehr wird die Fläche besser ausgenutzt, wenn ein rechteckförmiger Verlauf der Kennlinien erreicht werden kann. Dies läßt sich näherungsweise erreichen, indem man die Sättigung magnetischer Materialien ausnutzt. Damit wird erreicht, daß oberhalb einer bestimmten Flußverkettung $\Psi_3$ diese nur noch langsam anwächst. Das Maß der Abflachung im gesättigten Bereich ist dann durch die Länge der Laufstrecke der magnetischen Feldlinien im gesättigten Teil des Materials bestimmt. Dies führt zu einem Diagramm wie in Fig. 3. Dieses übliche Verfahren wird derzeit genutzt, indem man bei Reluktanzmotoren die Zähne von Rotor und/oder Stator so auslegt, daß sie diese Eigenschaft besitzen. Dies ist jedoch nur begrenzt oder in weiter Annäherung realisierbar.

Es ist Aufgabe der Erfindung, einen Reluktanzmotor der eingangs erwähnten Art zu schaffen, bei dem die Ausnutzung des Motors verbessert ist.

Die gestellte Aufgabe ist erfindungsgemäß dadurch gelöst, daß die Querschnitte der ferromagnetischen Kerne so bemessen sind, daß diese bei ihrer Aufmagnetisierung durch den Erregerstrom gleichzeitig mit den ausgeprägten Polteilen in die magnetische Sättigung geraten.

Nicht nur die Zähne des Rotors und des Stators werden damit als sättigbare Elemente des Motors herangezogen, sondern auch die die Zähne verbindenden Joche. Da der Materialquerschnitt der Joche so klein gehalten wird, daß diese gleichzeitig mit den Zähnen in magnetische Sättigung geraten, kann hier also von einem Motor mit Jochsättigung gesprochen werden.

Generell und mit gutem Gewinn ist die spezielle Jochausbildung insbesondere bei einphasigen, kleinbauenden Reluktanzmotoren anwendbar. Auch bei mehrphasigen Reluktanzmotoren ist die Jochsättigung allerdings verwendbar, wenn die Wege der magnetischen Flüsse der einzelnen Phasen getrennt werden. Die Sättigung der Joche kann sowohl im Rotor wie im Stator als auch in beiden Teilen stattfinden.

Die Jochsättigung eignet sich besonders für Reluktanzmotoren kleinerer Baugröße. Dort ist es nämlich schwierig, ein großes Verhältnis der Induktivitäten in den Stellungen I und II zu erzielen. Bei üblicher Auslegung steht lediglich die Länge der Zähne zur Verfügung, um einen Sättigungseffekt zur Steigerung der Ausnutzung des $\Psi$-I-Diagramms zu erzielen. Diese ist oft deutlich kleiner als die Länge der Joche.

Die Erfindung wird anhand der Zeichnung und von Diagrammen näher erläutert. Es zeigen:

Fig. 2 einen einphasigen Reluktanzmotor,

Fig. 3 ein $\Psi$-I-Diagramm des Reluktanzmotors nach Fig. 2 bei Sättigung der Zähne,

Fig. 4 ein $\Psi$-I-Diagramm des Reluktanzmotors nach Fig. 2 bei Sättigung der Zähne und des Joches.

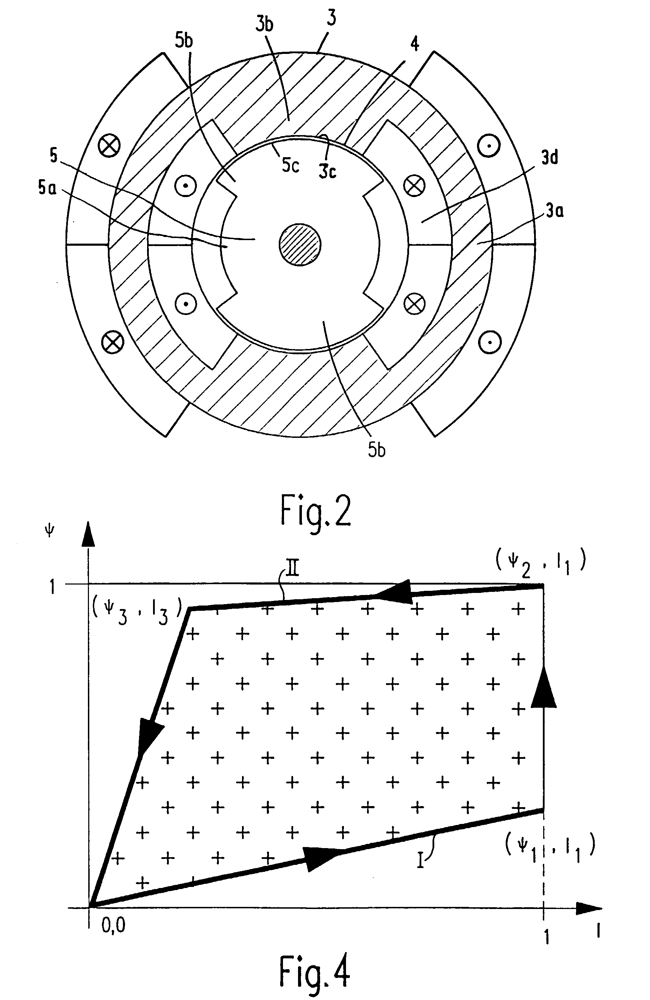

Fig. 2 zeigt einen Schnitt durch einen einphasigen Reluktanzmotor. Der Motor hat einen feststehenden ferromagnetischen Stator 3. Dieser Stator 3 weist als Kerne wirkende Joche 3a auf, die Statorzähne 3b verbinden. Die Polflächen 3c der Statorzähne 3b liegen an einem Luftspalt 4. Der Stator 3 wird erregt mittels vom Erregerstrom durchflossener Wicklungen 3d.

Innerhalb des Luftspaltes 4 ist ein Rotor 5 umlauffähig gelagert, der einen Polkern 5a aufweist und radial auseinander liegende Rotorzähne 5b mit Polflächen 5c.

Fig. 3 zeigt nun ein $\Psi$-I-Diagramm, bei dem die Zahnsättigung nach der Erfindung eingesetzt wird. Wie in Fig. 1 steigen Strom I und Flußverkettung bei der Aufmagnetisierung vom Punkt 0,0 entsprechend dem Kennlinienverlauf I zum Punkt ($\Psi_1$, $I_1$) und weiter zum Punkt ($\Psi_2$, $I_1$) an. Bei der Abmagnetisierung folgen Strom I und Flußverkettung $\Psi$ dem Kennlinienverlauf II. Aufgrund der Sättigung zeigt der Kennlinienverlauf II einen Knickpunkt $\Psi_3$, $I_3$. Dabei ist der Verlauf zwischen ($\Psi_2$, $I_1$) und ($\Psi_3$, $I_3$) flacher als in Fig. 1 ohne Zahnsättigung bei ausschließlicher Sättigung der Zähne.

Fig. 4 zeigt nun ein $\Psi$-I-Diagramm, bei dem zusätzlich zur Zahnsättigung die Jochsättigung nach der Erfindung eingesetzt wird. Wie in Fig. 1 und 3 steigen Strom I und Flußverkettung bei der Aufmagnetisierung vom Punkt 0,0 entsprechend dem Kennlinienverlauf I zum Punkt ($\Psi_1$, $I_1$) und weiter zum Punkt ($\Psi_2$, $I_1$) an. Bei der Abmagnetisierung folgen Strom I und Flußverkettung $\Psi$ dem Kennlinienverlauf II. Aufgrund der Sättigung zeigt der Kennlinienverlauf II einen Knickpunkt $\Psi_3$, $I_3$. Dabei ist der Verlauf zwischen ($\Psi_2$, $I_1$) und ($\Psi_3$, $I_3$) flacher als in Fig. 3 ohne Jochsättigung bei ausschließlicher Sättigung der Zähne. Das umfahrene Feld im Kreisdiagramm, das mit + bezeichnet ist, ist damit wesentlich vergrößert, womit auch die an der Welle abgegebene Leistung wesentlich vergrößert ist gegenüber der nach Fig. 1 und auch Fig. 3.

Unter dem Einfluß der Jochsättigung läßt sich der obere Bereich des Kennlinienverlaufes II deutlich flacher halten, als dies bei ausschließlicher Sättigung der Zähne möglich wäre. Dies wird dadurch bewirkt, daß die Steigungen der Kennlinien generell umgekehrt proportional der Laufstrecke im gesättigten Material sind. Bei kleinen Motoren und ausschließlicher Nutzung der Länge der Polzähne ergibt sich im Bereich der Sättigung noch eine zu große Steigung. Erst wenn auch die Joche so dimensioniert werden, daß sie gleichzeitig mit den Zähnen in den Sättigungszustand kommen, ist die Länge der gesättigten Strecke groß genug, um eine wesentliche Reduzierung der Steigung zu bewirken.

**Patentansprüche**

1.  Reluktanzmotor mit einem ferromagnetischen feststehenden Bauteil (3) und einem gegenüber diesem beweglichen ferromagnetischen Bauteil (5), die zwischen auf Abstand gegenüber befindlichen Polflächen (3c, 5c) ausgeprägter Polteile (3b, 5b) einen Luftspalt (4) aufweisen, wobei eines der Bauteile mit Erregerspulen versehen ist, die ferromagnetische Kerne (3a, 5a) umschließen, die eine ferromagnetische Verbindung zwischen den Polteilen (3b, 5b) dieses Bauteiles herstellen, <u>dadurch gekennzeichnet</u>, daß die Querschnitte der ferromagnetischen Kerne (3a, 5a) so bemessen sind, daß diese bei ihrer Aufmagnetisierung durch den Erregerstrom gleichzeitig mit den ausgeprägten Polteilen (3b, 5b) in die magnetische Sättigung geraten.

**Claims**

1.  A reluctance motor having a ferromagnetic stationary member (3) and a ferromagnetic member (5) which is movable relative thereto, which exhibit an air gap (4) between spaced-apart pole faces (3c, 5c) of salient pole parts (3b, 5b), one of the members being provided with excitation coils, which surround ferromagnetic cores (3a, 5a) providing a ferromagnetic coupling between the pole parts (3b, 5b) of said one member, <u>characterised in that</u> the ferromagnetic cores (3a, 5a) are dimensioned to have such cross-sections that during the magnetisation of said cores by the excitation current the cores are magnetically saturated at the same time as the salient pole parts (3b, 5b).

**Revendications**

1.  Moteur à réluctance avec un module fixe ferromagnétique (3) et un module ferromagnétique mobile (5) par rapport à celui-ci qui présente un entrefer (4) entre des surfaces polaires (3c, 5c) écartées l'une de l'autre de parties polaires (3b, 5b) saillantes, l'un des modules étant doté de bobines d'excitation qui renferment des noyaux ferromagnétiques (3a, 5a) établissant une liaison ferromagnétique entre les parties polaires (3b, 5b) de ce module, caractérisé en ce que les sections des noyaux ferromagnétiques (3a, 5a) sont dimensionnées de telle sorte que ceux-ci parviennent à saturation magnétique en même temps que les parties polaires saillantes (3b, 5b) lors de leur magnétisation par le courant d'excitation.

Fig.1

Fig.3

Fig.2

Fig.4